# EUROPEAN PATENT APPLICATION

(11) **EP 4 439 794 A1**
(43) Date of publication of application: **02.10.2024**
(21) Application number: 24153269.6
(22) Date of filing: 22.01.2024
(51) Int. Cl.: H01M 10/613, H01M 50/209

(54) **ENERGY STORAGE SYSTEM**

(30) Priority: 29.03.2023 KR 20230041520
(71) Applicant: SK On Co., Ltd., Seoul 03161 (KR)
(72) Inventor: JUNG, Jae Won, 34124 Daejeon (KR); PARK, Byung Jun, 34124 Daejeon (KR); PARK, Chan Ho, 34124 Daejeon (KR); BAEK, Moo Han, 34124 Daejeon (KR)
(74) Representative: Stolmár & Partner Patentanwälte PartG mbB

(57) **Abstract**

An energy storage system including a housing having an internal space; a plurality of battery modules accommodated in the internal space; a door portion coupled to the housing in such a manner as to be openable or closable; a cooling unit configured to supply a refrigerant to the internal space; and a guide unit disposed on one side of the cooling unit to guide a flow of the refrigerant, is disclosed.

## Description

### TECHNICAL FIELD

The present disclosure relates to an energy storage system.

### BACKGROUND

An energy storage system (ESS) may be a system or a device improving overall power use efficiency by storing power that has already been produced and supplying the stored power as needed.

As demand for such an energy storage system increases, technology that may quickly manufacture and supply the energy storage system is required.

Meanwhile, as use and distribution of the energy storage system increases, accidents related to fires and explosions are also increasing. In particular, fires or explosions in the energy storage system using a secondary battery (for example, a lithium-ion battery) may not be just accidents, but safety accidents that may cause casualties and require prevention and management.

A conventional energy storage system had an air conditioning system capable of supplying cooling air into an internal space of a container in order to cool the energy storage system.

However, when the energy storage system is provided in plural, it may be difficult for the air conditioning system to evenly distribute cooling air to each energy storage system. In particular, the conventional energy storage system may have a problem in that cooling air may flow indiscriminately in the internal space of the container to entirely deteriorate cooling performance of the energy storage system.

Therefore, there is a need for a method of increasing cooling efficiency of the energy storage system.

### SUMMARY

The disclosure of this patent document is conceived to solve at least some of the problems of the prior art as described above, and provides an energy storage system modularized to be transportable in a state in which manufacturing thereof is completed, and quickly implementing a large-capacity energy source at an installation destination.

Another object of the disclosure of this patent document is to provide an energy storage system having increased cooling performance and cooling efficiency.

In order to achieve the above object, in embodiments of the disclosure of this patent document, an energy storage system including a housing having an internal space; a plurality of battery modules accommodated in the internal space; a door portion coupled to the housing in such a manner as to be openable or closable; a cooling unit configured to supply a refrigerant to the internal space; and a guide unit disposed on one side of the cooling unit to guide a flow of the refrigerant, is provided.

In embodiments, the guide unit may be disposed between the cooling unit and the plurality of battery modules.

In embodiments, the cooling unit and the plurality of battery modules may oppose in a first direction, and the guide unit may be disposed to be inclined with respect to the first direction.

In embodiments, the cooling unit may include a discharge portion configured to discharge the refrigerant into the internal space; and a suction portion configured to suction the refrigerant.

In embodiments, the discharge portion and the suction portion may be disposed on an internal side of the door portion, and the discharge portion may be disposed below the suction portion.

In embodiments, the discharge portion may face the plurality of battery modules, and the suction portion may face the guide unit.

In embodiments, one surface of the guide unit may face the suction portion, and the other surface, opposite to the one surface, may face at least a portion of the plurality of battery modules.

In embodiments, one edge of the guide unit may be disposed between the discharge portion and the suction portion.

In embodiments, the energy storage system may further include a partition disposed on an internal side of the door portion, wherein an end portion of the partition in the first direction may be adjacent to the one edge of the guide unit.

In embodiments, the partition may be disposed on both sides of the cooling unit.

In embodiments, the energy storage system may further include a top frame disposed on top of the plurality of battery modules, wherein a separation space may be formed between the top frame and the housing.

In embodiments, a first edge of the guide unit may be adjacent to the cooling unit, and a second edge, opposite to the first edge, may be adjacent to the top frame.

In embodiments, the energy storage system may further include a fixing member coupled to the housing to prevent the battery module from being separated.

In embodiments, the energy storage system may further include a plurality of lifting holes provided in the housing and configured to allow a transportation means to be inserted.

In embodiments, the plurality of lifting holes may include a plurality of first lifting holes disposed in a top corner of the housing; and a plurality of second lifting holes disposed in a bottom portion of the housing.

### BRIEF DESCRIPTION OF DRAWINGS

Certain aspects, features, and advantages of the present disclosure may be illustrated by the following detailed description with reference to the accompanying drawings.
FIG. 1 illustrates a configuration in which a plurality of energy storage systems are connected.
FIG. 2 is a perspective view illustrating a state in which a door portion of an energy storage system is open.
FIG. 3 illustrates a configuration in which a battery module is inserted into an internal space of an energy storage system.
FIG. 4 illustrates a configuration in which a guide unit of an energy storage system is coupled.
FIG. 5 illustrates a configuration in which a refrigerant is circulated in an internal space of an energy storage system.
FIG. 6 is a perspective view of an energy storage system.
FIG. 7 is a partial enlarged view of an energy storage system.

### DETAILED DESCRIPTION

Prior to the detailed description of the disclosure of this patent document, terms or words used in the specification and claims should not be construed as limited to their usual or dictionary meanings. It is to be understood that the embodiments described herein and the configurations shown in the drawings are only the most preferred embodiments of the present disclosure and do not represent all of the technical ideas of the present disclosure, and that there may be various equivalents and variations that may be substituted for them in the present disclosure.

The same reference numbers or symbols in each drawing attached to this specification indicate parts or components that perform substantially the same function. For convenience of explanation and understanding, different embodiments may be described using the same reference numerals or symbols . For example, even if components having the same reference number may be illustrated in multiple drawings, the multiple drawings do not all represent one embodiment.

In the following description, singular expressions include plural expressions unless the context clearly dictates otherwise. Terms such as "include," "comprise," or the like may be intended to designate the presence of features, numbers, steps, operations, components, parts, or combinations thereof described in the specification, and one or more other features or numbers, it should be understood that this does not exclude in advance possibility of presence or addition of steps, operations, components, parts, or combinations thereof.

In addition, in the following description, expressions such as upward, on, top portion, downward, below, bottom portion, lateral, side surface, forward, front, rearward, rear, or the like may be expressed based on the direction illustrated in the drawings, and it should be noted in advance that when a direction of an object changes, it may be expressed differently.

Additionally, in this specification and claims, terms including ordinal numbers such as "first," "second," or the like may be used to distinguish between components . These ordinal numbers may be used to distinguish identical or similar components from each other, and the meaning of the term should not be interpreted limitedly due to the use of these ordinal numbers. For example, components combined with these ordinal numbers should not be interpreted as having a limited order of use or arrangement based on the number. If necessary, each ordinal number may be used interchangeably.

Hereinafter, embodiments of the disclosure of this patent document will be described with reference to the accompanying drawings. The shape and size of the elements in the drawings may be exaggerated for clearer description.

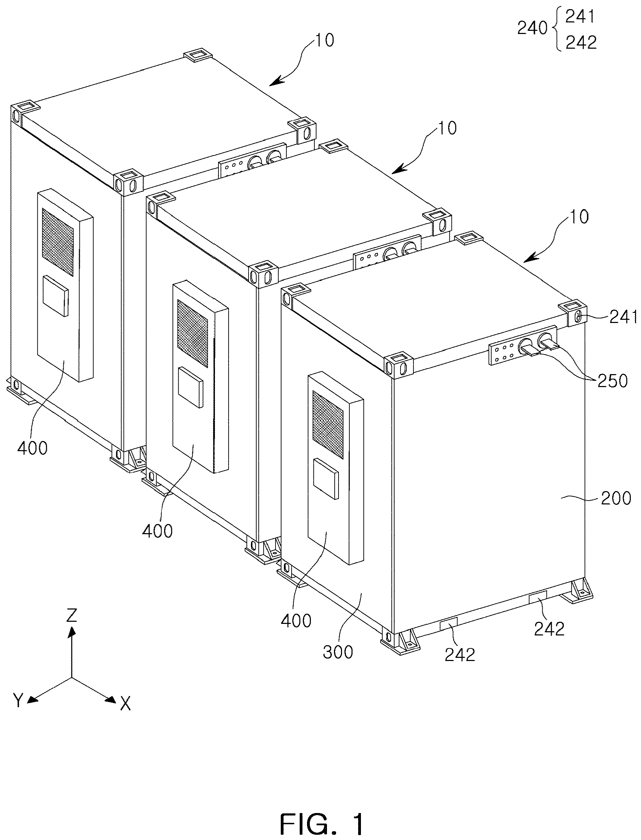

FIG. 1 illustrates a configuration in which a plurality of energy storage systems 10 are connected.

An energy storage system 10 according to embodiments may be used as an energy source for household or industrial purposes. As illustrated in FIG. 1, the energy storage system 10 may be provided as a plurality of energy storage systems 10 electrically connected to each other, to form an overall energy source.

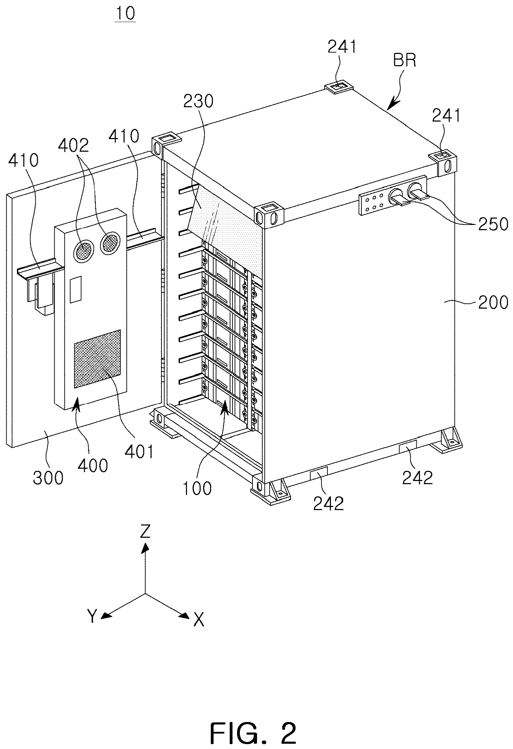

Any one energy storage system 10 of the energy storage systems 10 may include a housing 200 in which a battery module (for example, 100 in FIG. 2) may be stored, and a door portion 300 coupled to the housing 200 in such a manner as to be openable or closable.

A cooling unit 400 may be disposed in the door portion 300. The cooling unit 400 may be configured to supply a refrigerant into an internal space of the housing 200 or to suction the refrigerant in the internal space of the housing 200. The refrigerant may refer to gas or fluid that may cool the internal space of the housing 200 and components disposed in the internal space { e.g., a battery module (100 in FIG. 2) }.

For example, the cooling unit 400 may include an air conditioning device that may adjust a temperature, humidity, or the like of the internal space of the housing 200 such that the battery module (100 in FIG. 2) may be operated in an appropriate environment.

In embodiments, each of the energy storage systems 10 may include at least one cooling unit 400. For example, as illustrated in FIG. 1, the cooling units 400 may be individually disposed in the housing 200 of the energy storage system 10.

In this manner, as the cooling units 400 are individually disposed in each of energy storage systems 10, independent cooling is possible for each of the energy storage systems 10. For example, when an event (e.g., a phenomenon in which a temperature of the battery module increases above a safe temperature) occurs in one of the plurality of energy storage systems 10, the cooling unit 400 may supply the refrigerant at a higher output, allowing the event to be quickly controlled.

In addition, since the output of the cooling unit 400 may be adjusted in various manners in response to the temperature of each of the energy storage systems 10, cooling efficiency of the entire energy system, including a plurality of energy storage systems 10, may increase.

An energy storage system 10 according to embodiments may be configured to be movable. For example, the energy storage system 10 may be manufactured as a finished product with the battery module (e.g., 100 in FIG. 2) stored and fixed therein, and may be then moved to an installation site by a transportation means (e.g., a forklift, a crane, or the like).

Therefore, a plurality of energy storage systems 10 may be repeatedly manufactured in a factory, may be transported to the installation site in required quantities, and may be then electrically connected to each other, to quickly implement an energy source having capacity desired by a user.

The housing 200 of the energy storage system 10 may be provided with a plurality of lifting holes 240 to enable transportation by a transportation means. For example, a first lifting hole 241 may be provided on a top side of the housing 200 to be picked up by a crane or the like. Alternatively, a second lifting hole 242 may be provided on a bottom side of the housing 200 such that a fork, such as a forklift or the like, is inserted.

The plurality of energy storage systems 10 may be electrically connected to each other through a connection unit 250 provided in the housing 200. For example, referring to FIG. 1, the connection unit 250 may be exposed on one side surface of the housing 200 of any one energy storage system 10, and the connection unit 250 may be connected to the connection unit 250 of a neighboring energy storage system 10. In this manner, the plurality of energy storage systems 10 may be electrically connected to each other to implement a large-capacity energy source.

Hereinafter, a configuration of the energy storage system 10 will be described in detail with reference to FIG. 2.

FIG. 2 is a perspective view illustrating a state in which a door portion 300 of an energy storage system 10 is open.

Since an energy storage system 10 described in FIG. 2 corresponds to the energy storage system 10 in FIG. 1, overlapping descriptions will be omitted.

An energy storage system 10 may include a plurality of battery modules 100 and a battery rack BR in which the plurality of battery modules 100 are accommodated.

The battery module 100 may include at least one secondary battery capable of charging and discharging electricity, and may be configured to store or emit electrical energy. For example, the secondary battery included in the battery module 100 may be at least one of a pouch-type secondary battery, a cylinder-type secondary battery, and a prism-type secondary battery.

In the battery rack BR, the plurality of battery modules 100 may be stacked and arranged in one direction with a predetermined spacing. For example, referring to FIG. 2, the plurality of battery modules 100 may be inserted into the battery rack BR in a first direction (Y-axis direction) and may be stacked and arranged in a second direction (Z-axis direction), perpendicular to the first direction (Y-axis direction).

The plurality of battery modules 100 may be arranged in two rows as illustrated in FIG. 2, but are only illustrative, and may be arranged in one row or in three or more rows.

The battery rack BR may be a structure in which the battery module 100 may be accommodated.

The battery rack BR may include a housing 200 having an internal space, a shelf 210 disposed in the internal space of the housing 200 to mount the battery module 100, and a door portion 300 coupled to the housing 200 in such a manner as to be openable or closable.

The housing 200 may be provided as a box-shaped member in which at least one side thereof is open, such that the battery module 100 is inserted through the at least one side. In FIG. 2, the housing 200 is illustrated to have a hexahedral shape in which one side thereof is open, but is only illustrative, and a specific shape of the housing 200 may be appropriately changed depending on the user's needs.

The housing 200 may include a material having a certain rigidity. For example, the housing 200 may include a metal material such as iron, aluminum, stainless steel, or the like. In addition to metal, the housing 200 may be formed of any material as long as it has enough rigidity to maintain an exterior of the battery rack BR and protect the battery module 100 therein.

A connection unit 250 used for electrical connection with a neighboring energy storage system 10 may be disposed on one side of the housing 200. For example, the connection unit 250 may be formed of a bar-type member formed of a conductive material (e.g., metal), and may be exposed to an external environment on one side of the housing 200.

The door portion 300 may be coupled to one open side of the housing 200 in such a manner as to be openable or closable. For example, the door portion 300 may be hinged to the one open side of the housing 200 such that the user may open or close the housing 200 by pushing or pulling the door portion 300.

The energy storage system 10 may further include a cooling unit 400 capable of cooling the battery module 100 accommodated in the housing 200. For example, referring to FIG. 2, the cooling unit 400 may be disposed on the door portion 300 of the battery rack BR.

The cooling unit 400 may cool the battery module 100 by discharging a refrigerant (e.g., cooling air) into the internal space of the housing 200.

The cooling unit 400 may be coupled to the door portion 300.

The cooling unit 400 may include a discharge portion 401 through which the refrigerant is discharged, and a suction portion 402 through which the refrigerant discharged from the discharge portion 401 is sucked in and recovered.

The discharge portion 401 and the suction portion 402 of the cooling unit 400 may be disposed inside on an internal side of the door portion 300. In this case, the 'internal side' of the door portion 300 may refer to a portion facing the internal space of the housing 200 as the door portion 300 is closed.

For example, as illustrated in FIG. 2, the cooling unit 400 may be coupled to the door portion 300 such that the discharge portion 401 and the suction portion 402 are located on the internal side of the door portion 300. As the door portion 300 is closed, the discharge portion 401 and the suction portion 402 may be naturally arranged to oppose to the battery module 100 accommodated in the internal space of the housing 200.

In the cooling unit 400, the discharge portion 401 and the suction portion 402 may be arranged in a vertical direction (Z-axis direction). For example, the discharge portion 401 through which the refrigerant is discharged may be disposed on a bottom end of the cooling unit 400, and the suction portion 402 through which the refrigerant is sucked may be disposed on a top end of the cooling unit 400. Since a cold refrigerant discharged from the discharge portion 401 gradually increases in temperature by heat exchange with the battery module 100 and flows in an upward direction, the suction portion 402 may be disposed on the top end of the discharge portion 401, to implement efficient cooling flow in the battery module 100.

In embodiments, the cooling unit 400 of the energy storage system 10 may be arranged to face the battery module 100 in the housing 200. Therefore, a cold refrigerant may be supplied directly to the battery module 100 from the cooling unit 400, and cooling efficiency may increase, compared to a case in which the cooling unit 400 is disposed outside the housing 200.

The battery rack BR may further include a guide unit 230 capable of guiding flow of the refrigerant discharged from the cooling unit 400 into the housing 200. For example, referring to FIG. 2, the guide unit 230 may be provided such that at least a portion thereof has a plate shape, and may be disposed on a rear surface of the cooling unit 400.

The guide unit 230 may be configured to guide a flow of the refrigerant. For example, the guide unit 230 may be disposed between the cooling unit 400 and the battery module 100, to block the cold refrigerant discharged from the discharge portion 401 from flowing directly into the suction portion 402. Therefore, a flow direction of the cold refrigerant discharged from the discharge portion 401 may be guided toward the battery module 100.

One surface of the guide unit 230 may be arranged to face the suction portion 402, and the other surface opposite to the one side may be arranged to face a portion of the battery module 100.

If a direction in which the cooling unit 400 and the battery module 100 face each other is defined as a first direction (Y-axis direction), the guide unit 230 may be arranged to be inclined with respect to the first direction (Y-axis direction). For example, referring to FIG. 2, as the door portion 300 is closed, the cooling unit 400 coupled to the door portion 300 may move with at least a portion of the battery module 100 in the first direction (Y-axis direction), and the guide unit 230 may be installed in front of the battery module 100 with at least a portion of the guide unit 230 inclined in the first direction (Y-axis direction).

Referring to FIG. 2, the guide unit 230 may be disposed at an angle such that a bottom edge thereof is closer to the door portion 300, compared to a top edge thereof. In this case, the bottom edge of the guide unit 230 may be disposed adjacent to the cooling unit 400, as the door portion 300 is closed.

The battery rack BR may further include a partition 410 disposed on the door portion 300. The partition 410 may be configured to guide flow of the refrigerant, together with the guide unit 230.

For example, referring to FIG. 2, the partition 410 may be disposed to extend horizontally from one side of the cooling unit 400, and may come into contact with an end portion of the guide unit 230 as the door portion 300 is closed. The partition 410 may block the refrigerant from flowing into a gap between the guide unit 230 and an internal side surface of the door portion 300. Therefore, it is possible to more reliably prevent the cold refrigerant discharged from the discharge portion 401 from flowing directly toward the suction portion 402.

In embodiments, the partition 410 may be disposed on one side of cooling unit 400. For example, referring to FIG. 2, the cooling unit 400 may be disposed to protrude at a predetermined thickness on an internal side of the door portion 300, and the partition 410 may be disposed on both sides of the cooling unit 400 to block the refrigerant flowing through a gap between the guide unit 230 and the door portion 300.

Based on a height direction (e.g., Z-axis direction) of the battery rack BR, the partition 410 may be disposed between the discharge portion 401 and the suction portion 402 of the cooling unit 400.

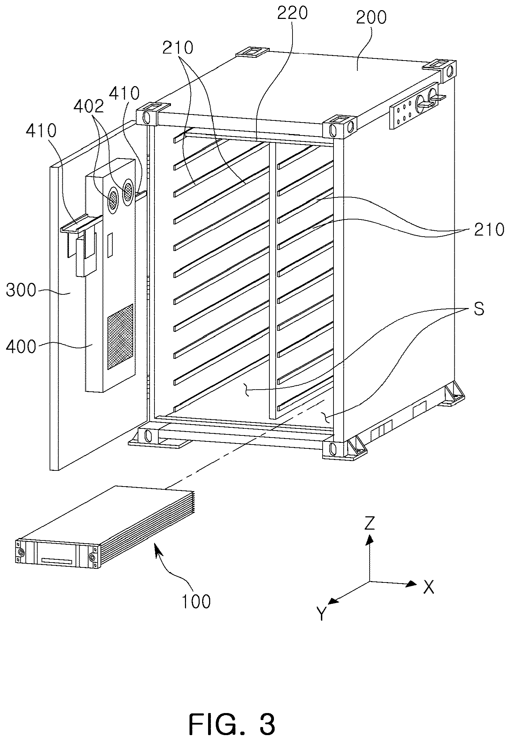

FIG. 3 illustrates a configuration in which a battery module 100 is inserted into an internal space of an energy storage system 10.

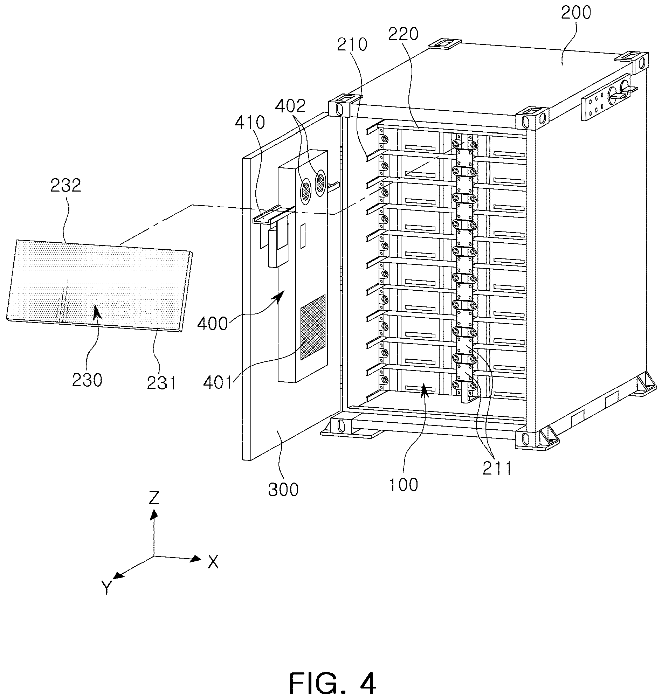

FIG. 4 illustrates a configuration in which a guide unit 230 of an energy storage system 10 is coupled.

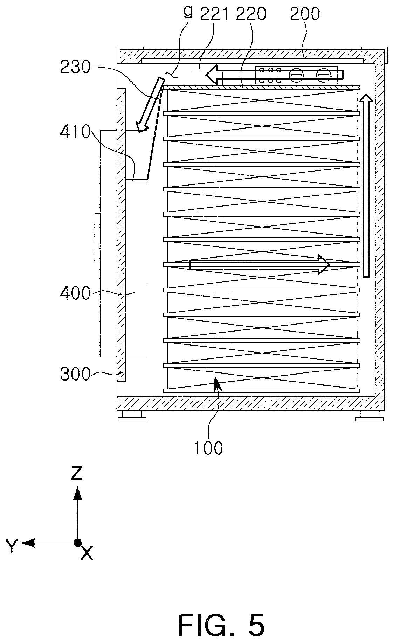

FIG. 5 illustrates a configuration in which a refrigerant is circulated in an internal space of an energy storage system 10.

Since an energy storage system 10 described in FIGS. 3 to 5 may include all of the features of the energy storage system 10 previously described in FIGS. 1 and 2, overlapping descriptions will be omitted.

A battery module 100 maybe inserted into a shelf 210 disposed in a housing 200, and may be accommodated in an internal space S. The shelf 210 may be configured to have a rail shape extending along an internal wall of the housing 200 and hang on at least a portion of the battery module 100.

For example, referring to FIGS. 3 and 4, the shelf 210 may be disposed to extend in a horizontal direction (e.g., Y-axis direction) in the housing 200, and the battery module 100 may be thus inserted into the shelf 210 in the first direction (Y-axis direction). An insertion direction of the battery module 100 is not limited thereto. For example, the shelf 210 of the housing 200 may be disposed to be inclined with respect to the first direction (Y-axis direction), and the battery module 100 may be thus inserted in a direction inclined with respect to the first direction (Y-axis direction).

The shelf 210 may be configured to accommodate the battery modules 100 in a plurality of rows. For example, FIG. 3 illustrates the battery module 100 configured to be arranged in two rows.

The battery module 100 may be supported by the shelf 210, and may be arranged in layers in a height direction (e.g., Z-axis direction).

In a process of accommodating the battery module 100 in the shelf 210, a fixing member 211 fixing the battery module 100 and the shelf 210 to each other may be assembled together with the battery module 100. For example, the fixing member 211 may be configured such that a portion thereof is coupled to the battery module 100 and another portion thereof is coupled to the housing 200 or the shelf 210.

The fixing member 211 may be provided as a plurality of fixing members 211, and the plurality of fixing members 211 may be arranged side by side in an arrangement direction of the battery module 100.

The fixing member 211 may fix the battery module 100 from being dislodged from the shelf 210 as the energy storage system 10 is being transported.

A guide unit 230 may be coupled to the housing 200 to be inclined with respect to the first direction (Y-axis direction) in a state in which the battery module 100 is stored in the shelf 210. An assembly sequence of the guide unit 230 is not limited thereto. For example, the guide unit 230 may be coupled to the housing 200 at the same time as the battery module 100 is accommodated and fixed. Alternatively, the guide unit 230 may be rotatably coupled to the housing 200 with a top edge as an axis. In this case, the energy storage system 10 may be manufactured by inserting and assembling the battery module 100 in a state in which the guide unit 230 rotates in an upward direction to secure a space for the battery module 100 to be inserted.

The housing 200 may further include a top frame 220 disposed on the shelf 210. The top frame 220 may be a plate-shaped member fixed to the housing 200 on a top portion of the shelf 210. The top frame 220 may face the battery module 100 accommodated on the shelf 210 in a vertical direction (e.g., Z-axis direction).

A separation space g in which a control unit (for example, 221 in FIG. 5) of the energy storage system 10 is accommodated may be formed between the top frame 220 and a top surface of the housing 200. In this case, the control unit 221 may include a battery management system (BMS) module, a battery protection unit (PBU) module, or the like. The control unit 221 may be seated and assembled on the top frame 220 to safely control the battery module 100 disposed below the top frame 220.

In embodiments, the guide unit 230 may be disposed such that one edge thereof is adjacent to the top frame 220. For example, referring to FIGS. 4 and 5, a first edge 231 of the guide unit 230 may be disposed adjacent to a cooling unit 400 in a state in which a door portion 300 is closed, and a second edge 232, opposite to the first edge 231, may be coupled to be adjacent to the top frame 220.

In a state in which the door portion 300 is closed, the first edge 231 of the guide unit 230 may be disposed between a discharge portion 401 and a suction portion 402 of the cooling unit 400. Additionally, the first edge 231 of the guide unit 230 may be disposed adjacent to an end portion of a partition 410 disposed on at least one side of the cooling unit 400.

The guide unit 230 may be disposed to be inclined with respect to the first direction (Y-axis direction). For example, the first edge 231 of the guide unit 230 may be disposed closer to the door portion 300, as compared to the second edge 232.

Hereinafter, flow of a refrigerant in the housing 200 will be described with reference to FIG. 5. In FIG. 5, an arrow displayed in the housing 200 indicates a flow direction of the refrigerant in the housing 200.

The guide unit 230 may guide the cold refrigerant discharged from the discharge portion 401 of the cooling unit 400 to flow toward the battery module 100.

The refrigerant discharged from the discharge portion 401 may flow toward the battery module 100. In this case, the guide unit 230 installed in front of the battery module 100 may block the refrigerant from flowing straight upward and into the suction portion 402 before it flows between the plurality of battery modules 100.

The partition 410 disposed on at least one side of the cooling unit 400 may be in contact with the guide unit 230, and may more reliably block the refrigerant from flowing in a gap between an internal side surface of the door portion 300 and the guide unit 230.

The refrigerant may cool the battery modules 100 in a process of passing between the plurality of battery modules 100 and flowing in a rear direction of the housing 200. The refrigerant of which temperature has risen due to heat exchange with the battery module 100 may flow in an upward direction, and may then flow into the suction section 402 of the cooling unit 400 along the separation space g between the top frame 220 and a top side surface of the housing 200.

The refrigerant may cool a connection unit 250 and the control unit 221 disposed on a top side of the top frame 220, while flowing in the separation space. For example, the refrigerant discharged from the discharge portion 401 may first cool the battery module 100 while circulating in the internal space S of the housing 200, and may then secondarily cool the control unit 221 and the connection unit 250.

The refrigerant in which circulation has completed may be sucked into the suction portion 402 of the cooling unit 400, and discharged outside the housing 200, or may be reused by heat exchange in the cooling unit 400.

The guide unit 230 may physically separate a flow space of the refrigerant in front of the battery module 100, and may guide the refrigerant to flow intensively toward the battery module 100.

Therefore, it is possible to prevent cooling performance from deteriorating due to the refrigerant flowing indiscriminately in front of the battery module 100 before it reaches the battery module 100. In addition, the guide unit 230 may block a cold refrigerant discharged from the discharge portion 401 from mixing with a hot refrigerant heat-exchanged with the battery module 100, thereby preventing a decrease in cooling efficiency.

In addition, since the discharge portion 401 of the cooling unit 400 may be located below the suction portion 402, the above-described circulation flow of the refrigerant may be realized more naturally.

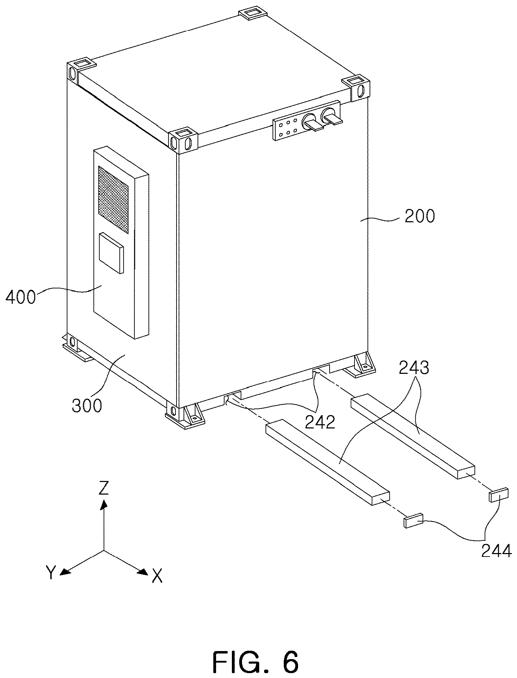

FIG. 6 is a perspective view of an energy storage system 10.

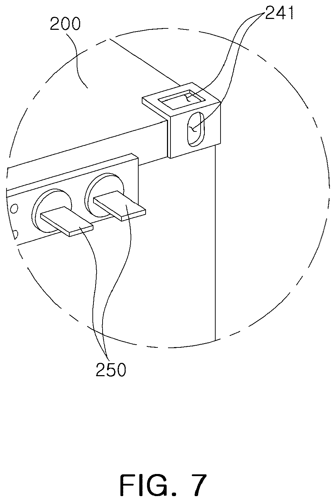

FIG. 7 is a partial enlarged view of an energy storage system 10.

Since an energy storage system 10 described in FIGS. 6 and 7 may include all of the features of the energy storage system 10 in FIGS. 1 to 5, overlapping descriptions will be omitted.

An energy storage system 10 that has been manufactured may be picked up by a transportation means, and may be transported to an installation destination.

A housing 200 of the energy storage system 10 may be provided with a plurality of lifting holes 240 to enable transportation by the transportation means (e.g., a forklift or a crane) . For example, a first lifting hole 241 may be provided on a top side of the housing 200, to be picked up by a crane or the like. Alternatively, a second lifting hole 242 may be provided on a bottom side of the housing 200 such that a fork, such as a forklift or the like, may be inserted thereinto.

The first lifting hole 241 may be provided to have a shape of a hole into which a tong or a hook of the crane is inserted. For example, as illustrated in FIG. 7, the first lifting hole 241 may be disposed in a top corner of the housing 200, and may be provided to have a shape of a hole to be exposed in an upward direction or in a lateral direction.

The second lifting hole 242 may be a hole provided in a bottom portion of the housing 200 into which a fork of the forklift may be inserted.

To prevent the transportation means from colliding with an air conditioning device of a door portion 300, the second lifting hole 242 may be provided on a side surface on which the door portion 300 is not disposed. For example, referring to FIG. 6, the door portion 300 in which a cooling unit 400 is installed may be disposed on one side of the housing 200, and the second lifting hole 242 may be provided in a bottom portion of a different side surface, adjacent to the one side of the housing 200.

After the energy storage system 10 is installed at a desired location, the second lifting hole 242 may be closed by mounting an insulation material 243 and a cover 244 on the second lifting hole 242. The insulation material may be inserted into a bottom portion of the energy storage system 10, to thermally and structurally protect a battery module 100 in the housing 200.

Energy storage systems 10 according to embodiments may have advantages of being modularized to be transportable in a state manufacturing thereof is completed, and quickly implementing a large-capacity energy source at an installation destination.

In addition, an energy storage system 10 may maximize cooling performance by providing a cooling unit 400 in a battery rack BR itself.

Additionally, an energy storage system 10 may increase cooling efficiency by effectively flowing a refrigerant discharged from a cooling unit 400 through a guide unit 230 installed in a battery rack BR.

Energy storage systems according to embodiments may quickly implement a large-capacity energy source at the installation destination.

Energy storage systems according to embodiments may maximize cooling performance by providing a cooling unit in a battery rack itself.

Energy storage systems according to embodiments may increase cooling efficiency by effectively flowing a refrigerant discharged from the cooling unit through a guide unit installed in the battery rack.

Only specific examples of implementations of certain embodiments are described. Variations, improvements and enhancements of the disclosed embodiments and other embodiments may be made based on the present disclosure. Additionally, the above-described embodiments may be implemented by deleting some components, and each embodiment may be implemented in combination with each other.

## Claims

1. An energy storage system comprising:
a housing having an internal space;
a plurality of battery modules accommodated in the internal space;
a door portion coupled to the housing in such a manner as to be openable or closable;
a cooling unit configured to supply a refrigerant to the internal space; and
a guide unit disposed on one side of the cooling unit to guide a flow path of the refrigerant.

2. The energy storage system of claim 1, wherein the guide unit is disposed between the cooling unit and the plurality of battery modules.

3. The energy storage system of claim 1, wherein the cooling unit and the plurality of battery modules oppose in a first direction, and
the guide unit is disposed to be inclined with respect to the first direction.

4. The energy storage system of claim 3, wherein the cooling unit comprises:
a discharge portion configured to discharge the refrigerant into the internal space; and
a suction portion configured to suction the refrigerant.

5. The energy storage system of claim 4, wherein the discharge portion and the suction portion are disposed on an internal side of the door portion, and
the discharge portion is disposed below the suction portion.

6. The energy storage system of claim 5, wherein the discharge portion faces the plurality of battery modules, and the suction portion faces the guide unit.

7. The energy storage system of claim 4, wherein one surface of the guide unit faces the suction portion, and the other surface, opposite to the one surface, faces at least a portion of the plurality of battery modules.

8. The energy storage system of claim 4, wherein one edge of the guide unit is disposed between the discharge portion and the suction portion.

9. The energy storage system of claim 8, further comprising a partition disposed on an internal side of the door portion,
wherein an end portion of the partition in the first direction is adjacent to the one edge of the guide unit.

10. The energy storage system of claim 9, wherein the partition is disposed on both sides of the cooling unit.

11. The energy storage system of claim 1, further comprising a top frame disposed on top of the plurality of battery modules,
wherein a separation space is formed between the top frame and the housing.

12. The energy storage system of claim 11, wherein a first edge of the guide unit is adjacent to the cooling unit, and a second edge, opposite to the first edge, is adjacent to the top frame.

13. The energy storage system of claim 1, further comprising a fixing member coupled to the housing to prevent the battery module from being separated.

14. The energy storage system of claim 1, further comprising a plurality of lifting holes provided in the housing and configured to allow a transportation means to be inserted.

15. The energy storage system of claim 14, wherein the plurality of lifting holes comprise:
a plurality of first lifting holes disposed in a top corner of the housing; and
a plurality of second lifting holes disposed in a bottom portion of the housing.
